(19) Europäisches Patentamt / European Patent Office / Office européen des brevets

(11) **EP 4 299 514 A1**

(12) **EUROPEAN PATENT APPLICATION**
published in accordance with Art. 153(4) EPC

(43) Date of publication:
**03.01.2024 Bulletin 2024/01**

(21) Application number: **22759486.8**

(22) Date of filing: **17.02.2022**

(51) International Patent Classification (IPC):
*C01B 32/05* [(2017.01)]  *H01G 11/42* [(2013.01)]
*H01G 11/86* [(2013.01)]  *H01M 4/36* [(2006.01)]
*H01M 4/38* [(2006.01)]  *H01M 4/587* [(2010.01)]

(52) Cooperative Patent Classification (CPC):
**C01B 32/05; H01G 11/42; H01G 11/86; H01M 4/36;
H01M 4/38; H01M 4/587;** Y02E 60/10

(86) International application number:
**PCT/JP2022/006440**

(87) International publication number:
**WO 2022/181447 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.02.2021 JP 2021029069**

(71) Applicant: **Nichia Corporation
Anan-shi, Tokushima 774-8601 (JP)**

(72) Inventors:
• **SUGIMOTO, Takashi
Anan-shi, Tokushima 774-8601 (JP)**
• **YOSHIDA, Hideki
Anan-shi, Tokushima 774-8601 (JP)**

(74) Representative: **Vossius & Partner
Patentanwälte Rechtsanwälte mbB
Siebertstraße 3
81675 München (DE)**

(54) **CARBON MATERIAL, METHOD FOR PRODUCING SAME, AND ELECTRODE ACTIVE SUBSTANCE**

(57)    Provided is a carbon material having a large specific surface area and good filling properties. The carbon material has a circularity of more than 0.83 and a specific surface area of not less than 400 m²/g. The carbon material is produced by a production method includes: providing a suspension containing first carbon particles having a specific surface area of not less than 50 m²/g, a water-soluble binder, and water; obtaining granular bodies from the suspension; and subjecting the granular bodies to heat treatment to obtain second carbon particles.

Fig. 1

EP 4 299 514 A1

**Description**

TECHNICAL FIELD

The present disclosure relates to a carbon material, a method of producing a carbon material, and an electrode active substance.

BACKGROUND ART

A lithium-sulfur battery is a secondary battery having a high energy density per unit mass which uses, for example, a mesoporous sulfur-carbon composite in which sulfur is positioned in mesopores. Because lithium-sulfur batteries are lighter weight than conventional lithium-ion batteries, their application to, for example, large-scale power machinery such as electric vehicles, and aircraft such as drones, has been expected. In these applications, batteries having high cycle capacity retention rates are demanded.

For example, Japanese Translated PCT Patent Application Laid-open No. 2019-513673 proposes a carbon-sulfur composite having a hierarchical pore structure, and its production method. Japanese Patent Publication No. 2016-141592 proposes a porous carbon-based spherical particle and its production method. Japanese Patent Publication No. 2014-42910 proposes a spherical carbon catalyst granular body and its production method.

SUMMARY OF THE INVENTION

PROBLEMS TO BE SOLVED BY THE INVENTION

An object of one embodiment of the present disclosure is to provide a carbon material having a good filling ability and a large specific surface area.

MEANS FOR SOLVING THE PROBLEMS

A first embodiment is a carbon material having a circularity of more than 0.83 and a specific surface area of not less than 400 $m^2/g$.

A second embodiment is a method of producing a carbon material, the method includes:
providing a suspension containing first carbon particles having a specific surface area of not less than 50 $m^2/g$, a water-soluble binder, and water; obtaining granular bodies from the suspension; and subjecting the granular bodies to heat treatment to obtain second carbon particles; wherein the second carbon particles has a circularity of more than 0.83 and a specific surface area of not less than 400 $m^2/g$.

A third embodiment is an electrode active substance comprising the carbon material.

EFFECT OF THE INVENTION

According to one embodiment of the present disclosure, a carbon material having a good filling ability and a large specific surface area can be provided.

BRIEF DESCRIPTION OF THE DRAWINGS

Fig. 1 is an exemplary scanning electron microscopic (SEM) image of a carbon material obtained in Example 1.
Fig. 2 is an exemplary cross-sectional SEM image of a carbon material obtained in Example 1.
Fig. 3 is an exemplary SEM image of a commercially available porous carbon material.
Fig. 4 is an exemplary cross-sectional SEM image of a commercially available porous carbon material.
Fig. 5 is an exemplary SEM image of a carbon material obtained in Example 2.
Fig. 6 is an exemplary cross-sectional SEM image of a carbon material obtained in Example 2.

MODE FOR CARRYING OUT THE INVENTION

In the present description, the term "step" includes not only an independent step, but also a step that is not clearly distinguishable from another step, as long as the desired purpose of the step can be achieved. Unless otherwise specified, when a plurality of substances corresponding to a certain component is present in a composition, the content of the component in the composition means the total amount of the plurality of substances present in the composition. The upper limit and lower limit of a numerical range described in the present description may be defined by discretionary selecting and combining values exemplified as numerical ranges. An embodiment of the present invention is described below based on drawings. The embodiments described below, however, are merely examples of the carbon materials, production methods thereof, and electrode active substances for realization of the technological consideration of the present invention. Therefore, the present invention is not limited to the carbon materials, production methods thereof, and electrode active substances described below.

Carbon Material

A carbon material according to the embodiments may have a circularity of more than 0.83 and a specific surface area of not less than 400 $m^2/g$. The carbon material may be porous spherical particles, and may be secondary particles formed by aggregation of a plurality of primary particles. When, for example, a desired functional component is given to a porous carbon material having a circularity of not less than a predetermined value, the component is likely to be uniformly given to the particles, leading to reduced unevenness of the amount of the component given among the particles. Therefore, for example, the action of the functional component can be more stabilized over time. Further, because the large specific surface area provides more reaction sites per mass, a desired effect may be sufficiently achieved even with a small amount of the component.

The circularity of the carbon material may be more than 0.83, or may be preferably not less than 0.86, more preferably not less than 0.9, or not less than 0.93. The upper limit of the circularity is 1. The circularity is an index indicating to what degree the outline shape of a particle is likely to be a circle. The more likely the outline shape of the particle is to be a circle, the closer the circularity is to 1. The circularity may be determined based on, for example, a planar view of the outline shape of the particle. When the diameter of the circle having the same area as the particle image area in the outline shape of the particle is defined as the circle equivalent diameter $d_{HA}$, the circularity is determined using the major axis $D_e$ of the smooth approximate ellipse calculated from the ratio obtained by dividing the major axis of the outline shape of the carbon material by the minor axis (major-minor ratio $\lambda$) and the particle image area of the outline shape of the carbon material. The circularity is defined as the ratio ($d_{HA}/D_e$) between the circle equivalent diameter $d_{HA}$, and the major axis $D_e$ of the smooth approximate ellipse calculated from the particle image area and the major-minor ratio of the outline shape of the carbon material.

$$\texttt{Circularity} = \texttt{d}_{\texttt{HA}}/\texttt{D}_\texttt{e}$$

Specifically, for each of 10 to 30 carbon material particles whose outlines can be fully observed, the circle equivalent diameter that is the diameter of the circle having the same area as the particle image area of the outline shape of the carbon material is determined using image processing software. Subsequently, the major axis and the minor axis are determined from the outline shape, and the major-minor ratio is calculated as the value obtained by dividing the major axis by the minor axis. The product of the particle image area and the major-minor ratio is divided by the ratio of the circumference of a circle to its diameter, and the square root of the resulting value is doubled to determine the major axis of the smooth approximate ellipse. The circularity of each particle is determined as the value obtained by dividing the circle equivalent diameter by the major axis of the smooth approximate ellipse. The circularity of the carbon material may be determined as the arithmetic average of the resulting values.

The specific surface area of the carbon material may be not less than 400 $m^2/g$, or may be preferably not less than 500 $m^2/g$, more preferably not less than 600 $m^2/g$ or not less than 650 $m^2/g$. The upper limit of the specific surface area may be, for example, not more than 3000 $m^2/g$, or may be preferably not more than 2500 $m^2/g$ or not more than 2000 $m^2/g$. The specific surface area of the carbon material is measured by the BET method, which is based on the BET (Brunauer Emmett Teller) theory. Specifically, for example, the specific surface area is measured by the single-point method using nitrogen gas.

The pore volume of the pores having a pore size of not more than 0.2 $\mu$m in the carbon material may be, for example, 1.5 $cm^3/g$ to 3 $cm^3/g$, or may be preferably not less than 1.6 $cm^3/g$, or not less than 1.7 $cm^3/g$, and may be preferably not more than 2.8 $cm^3/g$ or not more than 2.4 $cm^3/g$. In cases where a functional component is given to the carbon material whose pore volume of the pores having a pore size of not more than 0.2 $\mu$m is within this range, the amount of the functional component given per carbon weight may be increased. The pore volume is measured using, for example, the mercury porosimeter method.

The pore size of the carbon material, in terms of the peak pore size of pores having a pore size of not more than 0.2 um, may be, for example, 1 nm to 150 nm, or may be preferably not more than 120 nm or not more than 100 nm, and may be preferably not less than 2 nm, or not less than 20 nm. In cases where a functional component is given to the carbon material having a pore size within this range, the pores of the carbon material tend to be easily impregnated with the functional component. In particular, addition of sulfur tends to be more efficiently achieved. The pore size of the carbon material is measured using, for example, the mercury porosimeter method.

The carbon material may be formed such that it includes secondary particles formed by aggregation of a plurality of primary particles. The average particle size of the primary particles forming the secondary particles may be, for example, 1 nm to 200 nm, or may be preferably not less than 5 nm, or not less than 10 nm, and may be preferably not more than 150 nm, or not more than 100 nm. In cases where the average particle size of the primary particles is within this range, it may be possible to easily form a carbon material in which pores having smaller pore sizes are formed. The average particle size of the primary particles may be, for example, the average particle size $D_{SEM}$, which is based on electron microscopic observation. The average particle size of the primary particles based on electron microscopic observation is measured as follows. Primary particles forming the secondary particles are observed using a scanning electron microscope (SEM) at a magnification in a range of 20,000 to 100,000 depending on the particle size. Thirty primary particles whose outlines can be observed are selected, and their sphere-equivalent diameters are calculated from the outlines of the selected primary particles using image processing software. As the arithmetic average of the resulting sphere-equivalent diameters, the average particle size of the primary particles based on electron microscopic observation may be determined. In one embodiment, the primary particles may have particles attached to the surface thereof, which particles have an average particle size smaller than that of the primary particles. In one embodiment, the primary particles may be aggregates of particles having an average particle size smaller than that of the primary particles. The average particle size of the particles having an average particle size smaller than that of the primary particles may be measured based on electron microscopic observation in the same manner as described above. "The outline of a primary particle can be observed" means that the entire outline of the primary particle can be traced on an image.

In the secondary particles, the ratio of the 50% particle size $D_{50}$ in the cumulative particle size distribution by volume to the average particle size $D_{SEM}$ based on electron microscopic observation, $D_{50}/D_{SEM}$, may be, for example, not less than 10. The ratio $D_{50}/D_{SEM}$ is, for example, in a range of 10 to 2000, preferably not less than 50, more preferably not less than 100. The ratio $D_{50}/D_{SEM}$ is preferably not more than 1000, more preferably not more than 400. In cases where the ratio $D_{50}/D_{SEM}$ is within this range, particle strength of the secondary particles may be increased.

The primary particles may be hollow particles. In cases where the primary particles are hollow particles, the porosity of the particles may be, for example, not less than 10%, or is preferably not less than 20%, not less than 40%, not less than 50%, not less than 60%, not less than 70%, or not less than 80%. The upper limit of the porosity may be, for example, not more than 95%. In cases where the primary particles are hollow particles, the specific surface area of the carbon material tends to be increased.

The volume average particle size of the carbon material is, for example, 1 $\mu$m to 30 $\mu$m, or preferably not less than 2 $\mu$m or not less than 3 $\mu$m, and preferably not more than 25 $\mu$m, or not more than 20 $\mu$m. In cases where the volume average particle size of the carbon material is within this range, favorable fluidity is likely to be achieved. Therefore, for example, uneven distribution of the particles tends to be suppressed during the production of an electrode for a secondary battery, and this may enable production of a homogeneous electrode, resulting in improved durability and output characteristics. The volume average particle size herein is the 50% particle size $D_{50}$ corresponding to the cumulative 50% from the small-particle-size side in the cumulative particle size distribution by volume. The cumulative particle size distribution by volume is measured under wet conditions using a laser diffraction particle size distribution analyzer.

The carbon material may have a narrow particle size distribution. The particle size distribution, in terms of the value calculated by dividing the difference between the 90% particle size $D_{90}$ and the 10% particle size $D_{10}$ by the 50% particle size $D_{50}$ in the cumulative particle size distribution by volume, that is, $((D_{90}-D_{10})/D_{50})$, may be, for example, not more than 6, or is preferably not more than 4, more preferably not more than 2. The lower limit of the particle size distribution is, for example, not less than 0.05. The ratio representing the particle size distribution, $(D_{90}-D_{10})/D_{50}$, is an index indicating variation of the particle sizes of the individual particles in the particle group forming the carbon material. The smaller the value, the smaller the variation of the particle size. In cases where the particle size distribution of the carbon material is within the range described above, a functional component containing another element can be easily uniformly attached to the surface of the carbon material.

The carbon material may also contain another element in addition to carbon. Examples of the other element include main-group elements represented by nitrogen, oxygen, and the like; and transition metal elements. The carbon content in the carbon material may be, for example, not less than 70% by mass, or may be preferably not less than 80% by mass or not less than 90% by mass. The carbon material may be substantially composed only of carbon. The term "substantially" herein is meant not to exclude other elements that are inevitably contained.

Uses of the carbon material include: general adsorbents; negative-electrode materials of lithium-ion batteries; electrode materials of capacitors; sulfur carriers in positive-electrode materials of lithium-sulfur batteries; and catalyst carriers in air batteries, fuel cells, or the like.

Method of Producing Carbon Material

The carbon material described above may be produced by, for example, the following production method. The method of producing the carbon material may include: a providing step of providing a suspension containing first carbon particles having a specific surface area of not less than 50 $m^2/g$, a water-soluble binder, and water; a granulation step of obtaining granular bodies from the suspension; and a heat treatment step of subjecting the granular bodies to heat treatment to obtain second carbon particles. The obtained second carbon particles have a circularity of more than 0.83 and a specific surface area of not less than 400 $m^2/g$, and form the desired carbon material.

By allowing first carbon particles having a predetermined specific surface area to aggregate using a water-soluble binder to form granular bodies, and then subjecting the granular bodies to heat treatment, a carbon material having a predetermined circularity and a predetermined specific surface area may be efficiently produced as second carbon particles that are aggregates of the first carbon particles.

In the providing step, a suspension containing first carbon particles, a water-soluble binder, and water is provided. The suspension is provided as a dispersion in which the first carbon particles are dispersed in a liquid medium containing water. The dispersion state of the first carbon particles in the suspension may be a state in which individual particles of the first carbon particles are independently dispersed, or a state in which the dispersion contains independent individual particles and aggregates of particles. The dispersion state of the first carbon particles in the suspension may be a state in which the suspension can be subjected to spray drying.

The specific surface area of the first carbon particles may be, for example, not less than 50 $m^2/g$, or may be preferably not less than 200 $m^2/g$, more preferably not less than 400 $m^2/g$, or not less than 500 $m^2/g$. The upper limit of the specific surface area may be, for example, not more than 2000 $m^2/g$. The specific surface area of the first carbon particles is measured by the BET method described above.

The average particle size of the first carbon particles may be, for example, in a range of 1 nm to 200 nm, or may be preferably not less than 5 nm, or not less than 10 nm, and may be preferably not more than 150 nm, or not more than 100 nm. The average particle size of the first carbon particles is measured by, for example, electron microscopic observation.

The first carbon particles may be either hollow particles or solid particles. From the viewpoint of the specific surface area of the carbon material, the first carbon particles may be hollow particles. The hollow particle herein means a particle in which a cavity is formed. The porosity of the hollow particles may be, for example, not less than 10%, or may be preferably not less than 20%, not less than 40%, not less than 50%, not less than 60%, not less than 70%, or not less than 80%. The upper limit of the porosity may be, for example, not more than 95%. The solid particle means a particle in which voids are hardly formed, and which is filled with carbon atoms.

The carbon content in the first carbon particles may be, for example, not less than 70% by mass, or may be preferably not less than 80% by mass, or not less than 85% by mass. The first carbon particles may be substantially composed only of carbon. The term "substantially" is meant not to exclude other elements that are inevitably contained.

Specific examples of the first carbon particles include carbon blacks such as acetylene black, furnace black, channel black, thermal black, and Ketjen Black. A carbon material obtained by pulverizing a carbon material which is obtained by heating an organic compound under an inert atmosphere may also be used. The first carbon particles may contain at least one selected from the group consisting of these carbon blacks, or may contain at least Ketjen Black. The first carbon particles may be formed by one kind of carbon black, or may contain two or more kinds of carbon blacks.

The content of the first carbon particles in the suspension with respect to the total mass of the suspension may be, for example, in a range of 0.1% by mass to 50% by mass, or is preferably not less than 0.2% by mass, or not less than 0.5% by mass, and preferably not more than 30% by mass, or not more than 20% by mass. In cases where the content of the first carbon particles is within this range, a better suspension state may be obtained, so that granulation processes such as spray drying can be more efficiently carried out. Therefore, desired granular bodies tend to be easily produced.

The water-soluble binder is not limited as long as it is a substance which is soluble in water, and which is capable of binding the first carbon particles to each other in a dry state. The solubility of the water-soluble binder in water in terms of the solubility in 100 g of pure water at 25°C may be, for example, in a range of 1 g to 500 g, or is preferably not less than 10 g, more preferably not less than 50 g, and preferably not more than 450 g, more preferably not more than 400 g. Compared to water-insoluble binders, water-soluble binders tend to be uniformly bound to the surface of the first carbon particles during drying. In cases where granular bodies produced using a water-soluble binder are subjected to heat treatment, a carbon material having a large surface area is likely to be obtained while a particle shape having a high circularity is achieved. Further, in cases where the solubility in water is within the range described above, a larger specific surface area may be easily achieved while the binding ability to the first carbon particles is maintained.

Specific examples of the water-soluble binder include saccharides, such as monosaccharides represented by glucose, disaccharides represented by sucrose, and polysaccharides; water-soluble polymers represented by polyvinyl alcohol and polyethylene glycol; and water-soluble surfactants capable of uniformly dispersing the first carbon particles.

The water-soluble binder may include at least one selected from the group consisting of saccharides, water-soluble polymers, and water-soluble surfactants. The water-soluble binders may be used either as one type alone or as a combination of two or more kinds thereof.

The content of the water-soluble binder in the suspension with respect to the total mass of the suspension may be, for example, in a range of 0.1% by mass to 50% by mass, or is preferably not less than 0.2% by mass, or not less than 0.5% by mass, and preferably not more than 20% by mass, or not more than 10% by mass. The content ratio of the water-soluble binder to the first carbon particles may be, for example, 0.05 to 10, or is preferably not less than 0.1, and preferably not more than 5. In cases where the content of the water-soluble binder is within this range, a better suspension state may be obtained, so that granulation processes such as spray drying can be more efficiently carried out. Therefore, desired granular bodies tend to be obtained.

The liquid medium contained in the suspension includes at least water. The liquid medium may contain, in addition to water, a water-soluble organic solvent, when necessary. Examples of the water-soluble organic solvent include alcohol solvents such as methanol, ethanol, propanol, and isopropanol; ketone solvents such as acetone and methyl ethyl ketone; and nitrile solvents such as acetonitrile. The water content in the liquid medium may be, for example, not less than 50% by mass, or is preferably not less than 80% by mass. The liquid medium may be substantially composed only of water.

The suspension may also contain another component, when necessary. Examples of the other component include pH-adjusting agents, surfactants, and metal oxides. Examples of the pH-adjusting agents include inorganic acids such as hydrochloric acid, nitric acid, phosphoric acid, and sulfuric acid; organic acids such as acetic acid, citric acid, and oxalic acid; inorganic bases such as alkali metal hydroxides and alkaline earth metal hydroxides; and ammonia. Examples of the metal oxides include oxides containing a transition metal, such as titanium oxide and tungsten oxide. The metal oxides may include a compound complexed with an alkali metal, alkaline earth metal, or the like. Examples of the complexed compound include lithium titanate and lithium tungstate. The suspension may contain an organic acid as a pH-adjusting agent. In cases where the suspension contains a pH-adjusting agent, its content may be appropriately selected depending on the desired pH.

The suspension may be provided by, for example, mixing the first carbon particles, the water-soluble binder, the liquid medium containing water, and, when necessary, another component such as a pH-adjusting agent. Examples of the mixing method include mixing methods that are generally employed, such as use of a bead mill, a ball mill, a homogenizer, or a shear mixer including a planetary mixer.

In the granulation step, the suspension is subjected a granulation process to obtain granular bodies. The granulation process may be, for example, spray drying. The granulation process is not limited to spray drying, and examples of the granulation process also include a method in which an aggregating agent is added to the suspension to cause granulation, followed by filtration separation and drying, and a method in which granulation is carried out by emulsion aggregation of the suspension, followed by filtration separation and drying. The granular bodies are formed by binding of a plurality of first carbon particles by the water-soluble binder. The spray drying means drying of a suspension for the purpose of obtaining a particle-shaped product, during which the suspension is scattered into the form of small-size particles using a flow of a gas. Thus, as a dryer that can be used for the spray drying in the granulation step, an apparatus having both the spraying function and the drying function may be selected. Examples of such a dryer include not only the so-called spray-drying-type dryers, but also various dryers such as air flow dryers and fluidized bed dryers.

Conditions of the spray drying may be appropriately selected depending on the particle size of the desired granular bodies, and the like. The drying temperature in the spray drying may be, for example, in a range of 80°C to 150°C.

In the spray drying, a gas is fed to the dryer for the purposes of spraying of the suspension, drying, and the like. The type of the fed gas may be air or the like, or may also be an inert gas such as nitrogen gas or a noble gas, for example, argon gas. In cases where an inert gas is used, the spray drying can be more easily carried out irrespective of the type of the liquid medium of the suspension.

In the heat treatment step, the granular bodies obtained by the granulation step are subjected to heat treatment to obtain a carbon material as second carbon particles. In the heat treatment step, the water-soluble binder contained in the granular bodies are, for example, carbonized, resulting in binding of the first carbon particles to each other to form the second carbon particles. The heat treatment step may be carried out by the same step as the granulation step. For example, by spray pyrolysis or the like, the heat treatment step may be included in part of the granulation step.

The temperature in the heat treatment step may be, for example, in a range of 400°C to 2000°C, or may be preferably not less than 500°C, or not less than 550°C, and may be preferably not more than 1500°C, or not more than 1300°C. The heat treatment time may be, for example, in a range of 3 hours to 48 hours, or may be preferably not less than 4 hours, and may be preferably not more than 24 hours. The atmosphere for the heat treatment may be an inert gas such as nitrogen gas or a noble gas, for example, argon gas. In the atmosphere for the heat treatment, the oxygen concentration may be not more than 20% by volume, or may be preferably not more than 1% by volume.

The heat treatment may be carried out using, for example, a box furnace, a roller hearth kiln, a rotary kiln, or the like.

Electrode Active Substance

The electrode active substance includes the above-described carbon material. The carbon material has a shape having a high circularity while having a relatively large specific surface area. Therefore, the carbon material may exhibit good filling ability when applied to an electrode active substance.

An electrode active substance including the carbon material is applicable to, for example, a negative-electrode active substance of a lithium-ion battery, an electrode active substance of an electric double-layer capacitor, or a fuel cell. Further, in cases where, for example, a material containing sulfur element is supported on the carbon material, application to a positive electrode active substance for a lithium-sulfur battery is possible.

Positive Electrode Active Substance for Lithium-Sulfur Battery

The positive electrode active substance for a lithium-sulfur battery includes the carbon material described above, and a material containing sulfur element, which material is attached to the carbon material. The material containing sulfur element may be attached to the voids formed in the carbon material. Because the carbon material has a large specific surface area, the battery capacity may be increased. Further, because the carbon material has a predetermined circularity, the material containing sulfur element may be more uniformly attached thereto, and unevenness of the attachment among the particles may be suppressed, resulting in improved cycle characteristics of the battery. Further, good filling ability in the formation of an electrode may be achieved.

Examples of the material containing sulfur element include elemental sulfur, and polysulfides produced during the charge-discharge process of lithium-sulfur batteries. Specific examples of the material containing sulfur element include Ss, $Li_2Se$, $Li_2Se$, $Li_2S_4$, and $Li_2S_2$. From the viewpoint of the yield, elemental sulfur (Ss) is preferred.

The content of the material containing sulfur element positioned in the voids of the carbon material in the sulfur-carbon composite, in terms of the mass ratio of the material containing sulfur element with respect to the total mass of the carbon material and the material containing sulfur element, may be, for example, in a range of 25% by mass to 95% by mass, or is preferably in a range of 50% by mass to 90% by mass, more preferably in a range of 67% by mass to 80% by mass. The term "67% by mass" means the content at which the mixing ratio between sulfur and carbon is 2:1. The content of the material containing sulfur element may be, for example, not less than 25% by mass, preferably 50% by mass, or not less than 67% by mass, and may be, for example, not more than 95% by mass, preferably not more than 90% by mass, or not more than 80% by mass. In cases where the content of the material containing sulfur element is within these ranges, capacity degradation of the sulfur-carbon composite may be reduced.

The coefficient of variation (CV) of the ratios between the detected amounts of sulfur element and carbon element in the sulfur-carbon composite is, for example, less than 0.64, preferably not more than 0.6, or not more than 0.5, more preferably not more than 0.4. Regarding the lower limit, the coefficient of variation may be, for example, not less than 0.05. The coefficient of variation (CV) of the ratios between the detected amounts of sulfur element and carbon element is the value ($\sigma1/t1$) obtained by dividing the standard deviation $\sigma1$ of the ratios between the detected amounts of sulfur element and carbon element in 50 discretionary particles of the sulfur-carbon composite, by the average $t1$ of the ratios between the detected amounts. In cases where the coefficient of variation of the ratios between the detected amounts of sulfur element and carbon element is within the range described above, variation of the sulfur content is considered to be small among the particles of the sulfur-carbon composite, indicating the sulfur-carbon composite being homogeneous.

The average of the ratios between the detected amounts of sulfur element and carbon element, used for the calculation of the coefficient of variation, is calculated by selecting 50 discretionary particles of the sulfur-carbon composite and determining the arithmetic average of the ratios between the detected amounts in the particles. The standard deviation of the ratios between the detected amounts of sulfur element and carbon element is calculated from the resulting average and the ratios between the detected amounts in the particles. The ratios between the detected amounts in the sulfur-carbon composite may be measured using, for example, a scanning electron microscope (SEM) and an energy dispersive X-ray (EDX) spectrometer.

Positive Electrode for Lithium-Sulfur Battery

The positive electrode for a lithium-sulfur battery (hereinafter also simply referred to as "positive electrode") includes a current collector, and a positive electrode composition layer placed on the current collector, which layer contains the above-described positive electrode active substance for a lithium-sulfur battery. The positive electrode is produced by applying an electrode composition containing: the positive electrode active substance; a liquid medium; a binder; a conductive additive; and the like; to the current collector, and drying and press-molding the resulting product.

As the liquid medium, an organic solvent or water may be used depending on the use. Examples of the organic solvent include: amide solvents such as N-methyl-2-pyrrolidone (NMP); ketone solvents such as diisopropyl ketone, diisobutyl ketone, and methyl ethyl ketone; hydrocarbon solvents such as heptane; ether solvents such as tetrahydrofuran, dimethoxyethane, and dioxolane; amine solvents such as diethylenetriamine; and ester solvents. The organic solvents may be used either as one type alone or as a combination of two or more kinds thereof. The content of the liquid medium may be, for example, in a range of 10% by mass to 90% by mass with respect to the total mass of the electrode composition.

The binder is, for example, a material that aids the adhesion between the positive electrode active substance and the conductive additive or the like, and adhesion of the electrode composition to the current collector. Examples of the binder include polyvinylidene fluoride (PVDF), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene rubber (EPDM), sulfonated EPDM, styrene-butylene rubber, fluoro-rubber, and various copolymers. The content of the binder may be, for example, in a range of 0.05% by mass to 50% by mass with respect to the total mass of the electrode composition.

The conductive additive is, for example, a material that improves electric conductivity of the positive electrode composition layer. Examples of the conductive additive include graphites such as modified graphene, natural graphite, and artificial graphite; carbon blacks such as acetylene black, Ketjen Black, channel black, furnace black, lamp black, and thermal black; conductive fibers such as carbon fibers and metal fibers; and carbon materials such as graphene and carbon nanotubes. The content of the conductive additive may be, for example, in a range of 0.5% by mass to 30% by mass with respect to the total mass of the electrode composition.

Examples of the current collector include metals such as copper, stainless steel, aluminum, nickel, and titanium; composite materials provided by subjecting the surface of copper, stainless steel, or the like to surface treatment with carbon, nickel, titanium, silver, or the like; and carbon foils. In cases of production of a lightweight lithium-sulfur battery, for example, aluminum or a carbon foil is preferred as a lightweight current collector. The current collector having fine irregularities formed its surface can have the increased adhesive force to the positive electrode composition layer and the like. The current collector may be provided in various forms such as films, sheets, foils, nets, porous bodies, foams, and non-woven fabrics. The current collector may have a thickness of, for example, in a range of 3 μm to 500 μm.

Lithium-Sulfur Battery

The lithium-sulfur battery includes the positive electrode for a lithium-sulfur battery. The lithium-sulfur battery includes: the positive electrode for a lithium-sulfur battery; a negative electrode; an electrolyte placed between the positive electrode and the negative electrode; and the like. The lithium-sulfur battery may also include a separator, when necessary. The electrolyte may be included in the positive electrode for a lithium-sulfur battery, the negative electrode, and the separator.

Negative Electrode

As the negative electrode included in the lithium-sulfur battery, a known negative electrode may be used. Examples of a negative electrode material forming the negative electrode may include Li metal, Li-Si alloys, Li-Al alloys, Li-In alloys, lithium titanate (such as $Li_4Ti_5O_{12}$ and $LiTi_2O_4$), lithium-titanium composite oxides (such as $Li_4Ti_{5-x}Mn_xO_{12}$; $0<x<0.3$), and $Li_xC$ ($x \leq 6$). In these negative electrode materials, part of the lithium may be substituted by another alkali metal. Preferred examples of the negative electrode material include Li metal, Li-Si alloys, Li-Al alloys, Li-In alloys, and $Li_xC$ ($x \leq 6$). With these materials, high voltage can be extracted from the lithium-sulfur battery.

Separator

As the separator, a known material may be used. Examples of the material include porous polyethylene and polypropylene. A known separator may be used after coating.

Electrolyte

The electrolyte is not limited as long as it contains a lithium salt, which may be appropriately selected from the lithium salts used for conventional lithium-ion batteries. The lithium salt may include, for example, an anion containing fluorine element. Specific examples of the lithium salt including an anion containing fluorine element include $LiPF_6$, $LiBF_4$, $LiSbF_6$, $LiAsF_6$, $LiSO_3CF_3$, and $LiN(SO_2CF_3)_2$ (LiTFSI). The electrolyte may contain a lithium salt not containing fluorine element, such as lithium nitrate or $LiClO_4$. These electrolytes used may be either as one type alone or as a combination of two or more kinds thereof. The electrolyte may contain an organic solvent. As the organic solvent, a carbonate solvent, an ether solvent, an ester solvent, an amide solvent, a nitrile solvent, or a sulfur-containing solvent may be used. An organic solvent provided by substituting part of the atoms of the organic solvent by fluorine atoms may also be used. Examples of the organic solvent include carbonate solvents such as propione carbonate, ethylene carbonate, dimethyl carbonate, and ethyl methyl carbonate; ether solvents such as 1,3-dioxolane, 1,2-dimethoxyethane, 1,3-dimethoxypropane, 2,2,3,3-tetrafluoropropyl difluoromethyl ether, and tetrahydrofuran; ester solvents such as methyl formate, methyl acetate, and $\gamma$-butyrolactone; amide solvents such as N,N-dimethylacetamide and N,N-dimethylformamide; and sulfur-containing solvents such as sulfolane, dimethyl sulfoxide, and 1,3-propane sultone.

EXAMPLES

The present invention is described below by way of Examples. However, the present invention is not limited to these Examples.

(Example 1)

Provision of Carbon Material

To 10 g of Ketjen Black (manufactured by Lion Specialty Chemicals Co., Ltd.; Carbon ECP600JD), 5 g of sucrose, and 2.5 g of citric acid, water was added to a final volume of 1000 g, to obtain a mixed solution. The mixed solution and 400 g of zirconia beads (diameter, 0.65 mm) were placed in a 2-L plastic bottle, and allowed wet dispersion overnight, to obtain mixed slurry 1 as a suspension. The obtained mixed slurry 1 and air as a feed gas were fed to a spray dryer, and spraying was performed to obtain carbon precursor 1 as granular bodies. The carbon precursor 1 was subjected to heat treatment at 700°C for 10 hours under a nitrogen atmosphere, to thereby obtain carbon material 1. The Ketjen Black used had an average particle size of 34 nm and a specific surface area of 1270 m$^2$/g.

Provision of Sulfur-Carbon Composite

By mixing 4.5 g of sulfur (98%; Fujifilm Wako Pure Chemical Corporation) and 1.5 g of carbon material 1 together, a mixture was obtained. The obtained mixture was heated at 150°C for 3 hours in a heat-resistant and pressure-resistant container, to obtain a sulfur-carbon composite in which sulfur is attached to the carbon material. In the sulfur-carbon composite, the content of sulfur positioned in the voids of the carbon material was 75% by mass.

(Comparative Example 1)

By mixing 4.5 g of sulfur (98%; Fujifilm Wako Pure Chemical Corporation) with 1.5 g of CNovel (registered trademark) (manufactured by Toyo Tanso Co., Ltd.), which is a commercially available porous carbon material, a mixture was obtained. The obtained mixture was heated at 170°C for 15 hours in a heat-resistant and pressure-resistant container, to obtain a sulfur-carbon composite in which sulfur is attached to the carbon material. In the sulfur-carbon composite, the content of sulfur positioned in the voids of the carbon material was 75% by mass.

Evaluation of Circularity

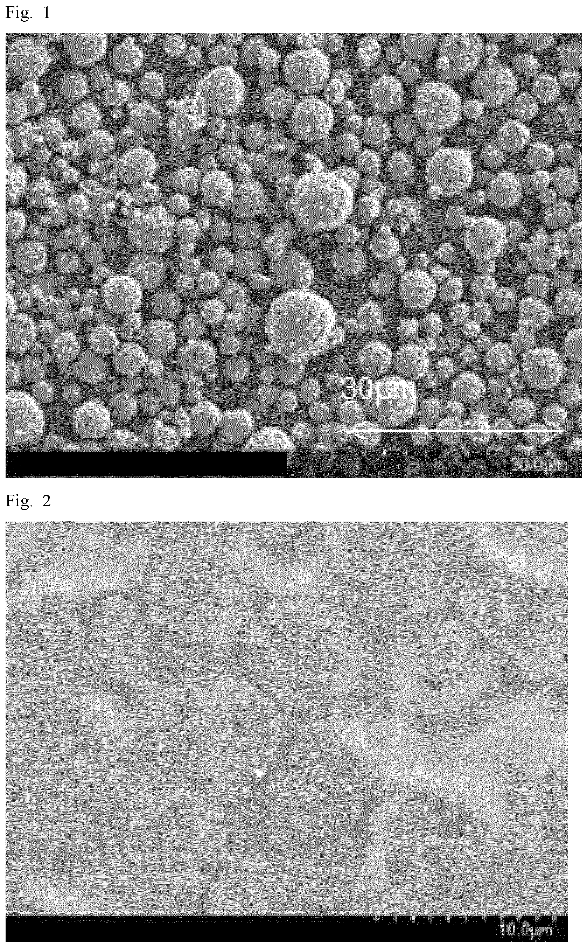

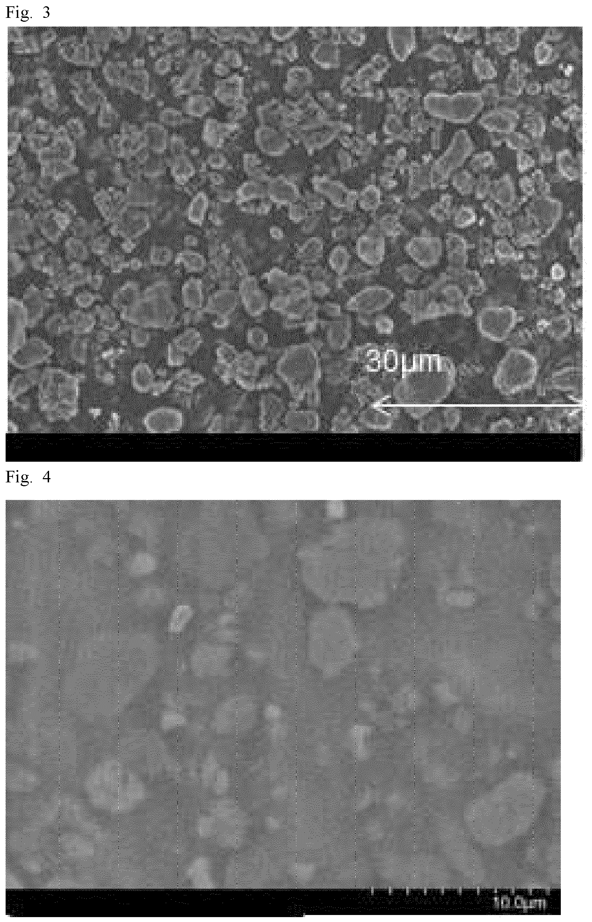

Each of the carbon material 1 obtained in Example 1 and the porous carbon material used in Comparative Example 1 was dispersed in an epoxy resin, and then heat-cured to provide an evaluation sample. The evaluation sample was subjected to cross-section treatment using an ion-milling machine (IM4000PLUS, manufactured by Hitachi High-Technologies Corporation; acceleration voltage, 6 kV). From the cross-section of the evaluation sample provided by the cross-section treatment, an electron beam image (4000-fold magnification) was captured using a scanning electron microscope (SEM), and 10 to 30 secondary particles whose outlines could be observed were selected. Using image processing software (ImageJ), each selected particle was subjected to determination of the circle equivalent diameter, which is the diameter of the circle having the same area as the particle image area of the outline shape of the second particle. Further, the major axis and the minor axis were determined from the outline shape, and the major-minor ratio was calculated as the value obtained by dividing the major axis by the minor axis. The product of the particle image area and the major-minor ratio was divided by the ratio of the circumference of a circle to its diameter, and the square root of the resulting value was doubled to define the major axis of the smooth approximate ellipse. The circularity of each particle was determined as the value obtained by dividing the circle equivalent diameter by the major axis of the smooth approximate ellipse. The circularity was calculated as the arithmetic average of the determined circularities. The results are shown in Table 2. An SEM image of the carbon material 1 obtained in Example 1 is shown in Fig. 1, and a cross-sectional SEM image of the material is shown in Fig. 2. An SEM image of the commercially available porous carbon material is shown in Fig. 3, and a cross-sectional SEM image of the material is shown in Fig. 4.

Evaluation of Pore Distribution

Using a mercury intrusion porosimeter (POREMASTER-60, manufactured by Anton Paar (former name: Quantachrome)), the pore volume and the peak pore size of the pores having a pore size of not more than 0.2 $\mu$m were measured.

Specific Surface Area

The specific surface area was measured by the nitrogen gas adsorption method (single-point method) using a BET specific surface area analyzer (Macsorb, manufactured by Mountech Co., Ltd.).

Average Particle Size of Primary Particles

Using a scanning electron microscope (SEM), an SEM image in which primary particles forming a secondary particle(s) could be observed was obtained at a magnification in a range of 20,000 to 100,000 depending on the particle size. On the SEM image, 30 primary particles whose outlines could be observed were selected, and the sphere-equivalent diameters of the selected primary particles were calculated from the outlines of the primary particles using image processing software. The average particle size of the primary particles was determined as the arithmetic average of the obtained sphere-equivalent diameters.

Particle Size Distribution

Using a laser diffraction particle size analyzer (MASTERSIZER 2000, manufactured by Malvern), the particle size distribution by volume was measured. The volume average particle size was calculated as the 50% particle size $D_{50}$, at which the volume integrated value was 50% from the small-particle-size side in the particle size distribution by volume. As the values at which the volume integrated value from the small-particle-size side was 10% or 90%, 10% particle size $D_{10}$ and 90% particle size $D_{90}$, respectively, were calculated, and the difference between $D_{90}$ and $D_{10}$ was divided by $D_{50}$ to calculate the particle size distribution.

[Table 1]

| | Carbon material 1 | Commercially available porous carbon material |
|---|---|---|
| Circularity | 0.97 | 0.83 |
| Specific surface area [m$^2$/g] | 1126 | 1423 |
| Pore volume of the pores having a pore size of not more than 0.2 $\mu$m [cm$^3$/g] | 1.72 | 1.69 |
| Peak pore size [nm] | 70 | 11 |
| Average particle size of the primary particles [nm] | 48.9 | 125.3 |
| Volume average particle size [$\mu$m] | 5.4 | 8.3 |
| Particle Size Distribution | 1.22 | 6.05 |

As shown in Table 1, carbon material 1 had a higher circularity than the commercially available porous carbon material. Moreover, carbon material 1 had a larger pore volume of the pores having a pore size of not more than 0.2 $\mu$m.

Evaluation of Variation of S/C Ratio

Each of the sulfur-carbon composites obtained in the Example and the Comparative Example was attached to a carbon tape, and discretionary 50 particles were subjected to SEM-EDX analysis (SEM apparatus: JEOL-IT100, manufactured by JEOL Ltd. (acceleration voltage, 15 kV); EDX apparatus: E-MAX80, manufactured by Oxford (acceleration voltage, 15 kV)). The average and the standard deviation were calculated for the ratios between the detected amounts of sulfur element and carbon element, and the variation among the particles was evaluated.

Specifically, the detected amount of sulfur element in each particle was divided by the detected amount of carbon element, to calculate the ratio between the detected amounts of sulfur element and carbon element (S/C ratio). The resulting ratio between the amounts detected was used for the calculation of the arithmetic average t1 and the

standard deviation $\sigma 1$ of the ratios between the detected amounts in all particles. In this process, the standard deviation $\sigma 1$ was calculated using the STDEV.P function of EXCEL (registered trademark). From the obtained arithmetic average t1 and standard deviation $\sigma 1$ of the ratios between the detected amounts, the coefficient of variation CV ($\sigma 1/t1$) was determined. The results are shown in Table 2.

[Table 2]

|  | CV |
|---|---|
| Example 1 | 0.35 |
| Comparative Example 1 | 0.64 |

As shown in Table 2, the sulfur-carbon composite using carbon material 1, which has a high circularity, showed less variation of the attached sulfur compared to the sulfur-carbon composite of Comparative Example 1.

Production of Positive Electrode

A slurry was provided by dispersing and dissolving 80 parts by mass of the sulfur-carbon composite obtained in Example 1 and Comparative Example 1, 16 parts by mass of PVDF, and 4 parts by mass of carbon nanotubes, in NMP. The provided slurry was applied to a current collector, and then dried to obtain a dried product. As the current collector, an aluminum foil covered with carbon was used. The dried product was compression-molded using a roll-press machine such that the density of the active substance layer was 0.63 g/cm$^3$, and then cut into a predetermined size, to obtain a positive electrode.

Production of Non-aqueous Electrolyte

A non-aqueous electrolyte was provided as follows. At a volume ratio of 5:5, 1,3-dioxolane (DOL) and 1,2-dimethoxyethane (DME) were mixed together. In the obtained mixed solvent, lithium bis(trifluoromethanesulfonyl)imide (LiTFSI) was dissolved such that its concentration was 1.0 mol/L. Subsequently, lithium nitrate (LiNOs) was dissolved therein such that its concentration was 0.2 mol/L, to provide a non-aqueous electrolyte.

Assembly of Lithium-Sulfur Secondary Battery

A lead electrode was attached to the positive electrode obtained as described above, and a separator composed of a porous polypropylene (Celgard 2400) was arranged thereto, followed by placing them in a bag-shaped laminated pack. This was followed by vacuum drying at 50°C to remove water adsorbed on each member. Thereafter, metallic lithium arranged on an SUS foil as a negative electrode was placed in the laminated pack in such a manner as to face the positive electrode through porous polypropylene. The non-aqueous electrolyte was injected into the pack, and then the pack was sealed to obtain a laminated lithium-sulfur secondary battery as an evaluation battery. Using the obtained evaluation battery, the following battery properties were evaluated.

Evaluation of Charge-Discharge Cycle Capacity Retention Rate

The evaluation battery obtained as described above was placed in a constant-temperature chamber at 25°C, and a test for evaluation of the cycle capacity retention rate was carried out. The test was carried out at a charge-discharge voltage in a range of 1.8 V to 3.0 V. The current value for extracting the 0.2C capacity was used as the discharge current. The discharge capacity at the 1st cycle, Qcyc(1) (mAh/g), immediately after the beginning of the discharge was measured. Charge and discharge were repeated thereafter, and the discharge capacity at the 30th cycle, Qcyc(30), was measured. Qcyc(30) was divided by the resulting Qcyc(1), to calculate the capacity retention rate after cycle 30, Pcyc (=$100 \times$Qcyc(30)/Qcyc(1))(%). The results are shown in Table 3. The discharge capacity was calculated in terms of the capacity per mass of sulfur.

[Table 3]

|  | Qcyc(1) (mAh/g) | Pcyc (%) |
|---|---|---|
| Example 1 | 1044.6 | 85.3 |
| Comparative Example 1 | 1088.2 | 71.8 |

The evaluation battery comprising the positive electrode active substance provided using carbon material 1 had improved cycle characteristics.

(Example 2)

Production of Carbon Material

Carbon material 2 was obtained by the same method as in Example 1 except that a different feed ratio between mixed slurry 1 and the feed gas was employed.

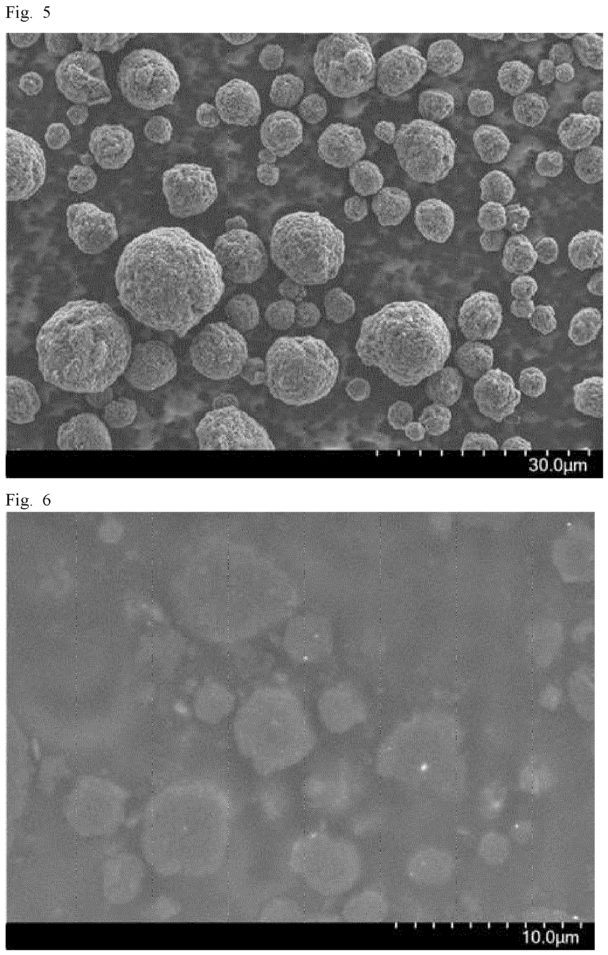

The resulting carbon material 2 had a circularity of 0.94, a specific surface area of 885 $m^2$/g, a volume average particle size of 9.6 $\mu$m, and a particle size distribution of 1.42. An SEM image of the carbon material 2 obtained in Example 2 is shown in Fig. 5, and a cross-sectional SEM image of the material is shown in Fig. 6.

Evaluation of Powder Resistance

Each of carbon material 2 and a commercially available porous carbon material was subjected to compression molding by application of the pressing pressures shown in Table 4, to obtain compression-molded products. The thickness of the compression-molded product at each pressing pressure was measured using a micrometer, and the volume was calculated therefrom. The mass of the carbon material used was divided by the volume, to calculate the density of the compression-molded product. Further, the powder resistance of the compression-molded product at each pressing pressure was evaluated by the four-probe method using MCP-PD51, manufactured by Nittoseiko Analytech Co., Ltd. (former name: Mitsubishi Chemical Analytech Co., Ltd.). The results are shown in Table 4.

[Table 4]

|  | Pressing pressure [MPa] | Density [g/cm$^3$] | Powder resistance [$\Omega$] |
|---|---|---|---|
| Carbon material 2 | 12.7 | 0.513 | 0.095 |
|  | 25.5 | 0.643 | 0.063 |
|  | 38.2 | 0.745 | 0.049 |
|  | 50.9 | 0.833 | 0.041 |
|  | 63.7 | 0.915 | 0.035 |
| Commercially available porous carbon material | 12.7 | 0.412 | 0.339 |
|  | 25.5 | 0.518 | 0.218 |
|  | 38.2 | 0.605 | 0.168 |
|  | 50.9 | 0.682 | 0.138 |
|  | 63.7 | 0.753 | 0.118 |

As shown in Table 4, carbon material 2, which has a high circularity, showed a higher filling ability compared to the commercially available porous carbon material of the Comparative Example when carbon material 2 was compressed at the same pressing pressure. Moreover, based on comparison at almost the same density, carbon material 2 showed a reduced powder resistance compared to the commercially available porous carbon material. Thus, carbon material 2 showed better properties also in the electric conductivity.

The disclosure of Japanese patent application No. 2021-029069 (filing date: February 25, 2021) is incorporated herein by reference in its entirety. All documents, patent applications, and technical standards cited in the present description are incorporated herein by reference to the same extent as in cases where the individual documents, patent applications, and technical standards are specifically and individually described to be incorporated by reference.

**Claims**

1. A carbon material having a circularity of more than 0.83 and a specific surface area of not less than 400 $m^2$/g.

2. The carbon material according to claim 1, having a volume average particle size of 1 $\mu$m to 30 $\mu$m.

3. The carbon material according to claim 1 or 2, whose pores having a pore size of not more than 0.2 $\mu$m have a pore volume of 1.5 cm$^3$/g to 3 cm$^3$/g.

4. The carbon material according to any one of claims 1 to 3, comprising secondary particles formed by aggregation of a plurality of primary particles comprising carbon.

5. The carbon material according to claim 4, wherein the primary particles have an average particle size of 1 nm to 200 nm.

6. An electrode active substance comprising the carbon material according to any one of claims 1 to 5.

7. The electrode active substance according to claim 6, further comprising sulfur element on the carbon material.

8. A method of producing a carbon material, the method comprising:

   providing a suspension containing first carbon particles having a specific surface area of not less than 50 m$^2$/g, a water-soluble binder, and water;
   obtaining granular bodies from the suspension; and
   subjecting the granular bodies to heat treatment to obtain second carbon particles; wherein
   the second carbon particles having a circularity of more than 0.83 and a specific surface area of not less than 400 m$^2$/g.

9. The production method according to claim 8, wherein the first carbon particles contain a hollow particle.

10. The production method according to claim 9, wherein the first carbon particles have a specific surface area of not less than 400 m$^2$/g.

Fig. 1

Fig. 2

Fig. 3

Fig. 4

Fig. 5

Fig. 6

## INTERNATIONAL SEARCH REPORT

International application No.

**PCT/JP2022/006440**

### A. CLASSIFICATION OF SUBJECT MATTER

*C01B 32/05*(2017.01)i; *H01G 11/42*(2013.01)i; *H01G 11/86*(2013.01)i; *H01M 4/36*(2006.01)i; *H01M 4/38*(2006.01)i; *H01M 4/587*(2010.01)i

FI: C01B32/05; H01G11/42; H01G11/86; H01M4/36 A; H01M4/38 Z; H01M4/587

According to International Patent Classification (IPC) or to both national classification and IPC

### B. FIELDS SEARCHED

Minimum documentation searched (classification system followed by classification symbols)

H01M4/36; H01M4/38; H01M4/587; H01G11/42; H01G11/86; C01B32/05

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | CN 103663450 A (INSTITUTE OF PROCESS ENGINEERING, CHINESE ACADEMY OF SCIENCES) 26 March 2014 (2014-03-26)<br>claims, abstract, paragraph [0002], examples 1-10 | 1-6, 8-10 |
| X | JP 2015-198169 A (ASAHI KASEI CORP) 09 November 2015 (2015-11-09)<br>claims, paragraph [0025], example 7 | 1-3, 6 |
| X | JP 2015-198164 A (ASAHI KASEI CORP) 09 November 2015 (2015-11-09)<br>claims, paragraph [0035], example 7 | 1-3, 6 |
| X | JP 2017-509120 A (BLUE SOLUTIONS) 30 March 2017 (2017-03-30)<br>claims, paragraphs [0015]-[0024], [0033]-[0035] | 1, 3-7 |
| P, X | WO 2021/241747 A1 (SHOWA DENKO KK) 02 December 2021 (2021-12-02)<br>claims, table 1, examples, comparative examples 2-6 | 1-3, 6 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 April 2022** | **26 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/006440**

| Patent document cited in search report | | | Publication date (day/month/year) | Patent family member(s) | Publication date (day/month/year) |
|---|---|---|---|---|---|
| CN | 103663450 | A | 26 March 2014 | (Family: none) | |
| JP | 2015-198169 | A | 09 November 2015 | (Family: none) | |
| JP | 2015-198164 | A | 09 November 2015 | (Family: none) | |
| JP | 2017-509120 | A | 30 March 2017 | US 2018/0175375 A1 claims, paragraphs [0028]-[0037], [0046]-[0050] WO 2015/136197 A1 KR 10-2017-0003534 A CN 106537657 A | |
| WO | 2021/241747 | A1 | 02 December 2021 | (Family: none) | |

Form PCT/ISA/210 (patent family annex) (January 2015)

**REFERENCES CITED IN THE DESCRIPTION**

**Patent documents cited in the description**

- JP 2019513673 W
- JP 2016141592 A
- JP 2014042910 A
- JP 2021029069 A